(19) Europäisches Patentamt
European Patent Office
Office européen des brevets

(11) **EP 1 848 961 B1**

(12) **EUROPÄISCHE PATENTSCHRIFT**

(45) Veröffentlichungstag und Bekanntmachung des Hinweises auf die Patenterteilung:
**31.12.2008 Patentblatt 2009/01**

(21) Anmeldenummer: **06706728.0**

(22) Anmeldetag: **08.02.2006**

(51) Int Cl.:
*G01B 11/00* (2006.01)    *G06T 7/00* (2006.01)

(86) Internationale Anmeldenummer:
**PCT/EP2006/001084**

(87) Internationale Veröffentlichungsnummer:
**WO 2006/087123 (24.08.2006 Gazette 2006/34)**

(54) **VERFAHREN ZUR KALIBRIERUNG EINES MESSSYSTEMS**

METHOD FOR CALIBRATING A MEASURING SYSTEM

PROCEDE D'ETALONNAGE D'UN SYSTEME DE MESURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.02.2005 DE 102005007536**

(43) Veröffentlichungstag der Anmeldung:
**31.10.2007 Patentblatt 2007/44**

(73) Patentinhaber: **Isra Vision Systems AG
64297 Darmstadt (DE)**

(72) Erfinder: **ERSÜ, Enis
64297 Darmstadt (DE)**

(74) Vertreter: **KEIL & SCHAAFHAUSEN
Patentanwälte
Cronstettenstrasse 66
D-60322 Frankfurt am Main (DE)**

(56) Entgegenhaltungen:
**EP-A- 0 763 406          EP-A- 1 143 221
EP-A- 1 213 683          WO-A-99/22281**

**Beschreibung**

Die Erfindung betrifft ein Verfahren zur Kalibrierung eines auf mindestens einer Kamera basierenden Messsystems zur Bestimmung der Lage eines Objekts in einem dreidimensionalen Bezugskoordinatensystem, bei dem die äußeren und inneren Kameraparameter in verschiedenen Schritten kalibriert werden und die Position der Kamera mit einem externen Messmittel bestimmt wird.

Im Rahmen einer immer weiter zunehmenden Automatisierung von Verfahrens- und Produktionsabläufen mittels Manipulatoren, bspw. Robotern, ist es notwendig, die Lage der zu bearbeitenden Objekte im Raum automatisiert genau zu bestimmen, damit die Manipulatoren gezielt an den Objekten angreifen können.

Hierzu werden häufig optische Messsysteme eingesetzt, welche Bilder der Objekte im Bearbeitungsraum der Manipulatoren aufnehmen und mittels Bildverarbeitung auswerten, um aus Merkmalen der aufgenommenen Objekte deren Orientierung im Raum zu ermitteln. Voraussetzung für das Funktionieren derartiger optischer Messsysteme ist eine Kalibrierung der optischen Aufnahmesysteme bzw. Kameras in einem geometrischen Kameramodell, das der Auswertung der Bilder zugrundegelegt wird. Für die Kalibrierung sind sowohl sogenannte "innere" Kameraparameter, welche die Objektiv- bzw. Linseneigenschaften der Kamera sowie die relative Anordnung von Objektiv und Bildsensor, bspw. CCD oder CMOS Sensor, betreffen, als auch sogenannte "äußere" Kameraparameter zu bestimmen, welche die geometrische Lage, Position und Orientierung der Kamera im Raum betreffen.

Für die Kalibrierung der Kamera sind eine Vielzahl verschiedener Kalibrierverfahren beschrieben. Einen Überblick hierüber gibt der Aufsatz R. Gerdes et. al., "Kalibrierung eines digitalen Bildverarbeitungssystems mit CCD-Kamera", tm - Technisches Messen 60 (1993) 6 und 60 (1993) 7/8, R. Oldenbourg Verlag, in dem klassische Ansätze für Kalibrierverfahren beschrieben werden. Bei einem aus der Photogrammetrie abgeleiteten Ansatz werden ein vollständiges Modell der Kamera aufgestellt und die Modellparameter durch Auswertung von Punktkorrespondenzen ermittelt. Die Punktkoordinaten werden durch Aufnahme bekannter zwei- oder dreidimensionaler Punktanordnungen eines Kalibrierkörpers und Zuordnung der Bildpunkte zu den entsprechenden Szenepunkten gewonnen. Die dabei im allgemeinen Fall auftretenden nichtlinearen Gleichungssysteme werden mit Hilfe iterativer Suchverfahren numerisch gelöst. Kalibrierverfahren, die diesen Ansatz verfolgen, sind in der Regel sehr rechenintensiv, genügen aber auch höchsten Genauigkeitsanforderungen. Ferner sind lineare Modelle bekannt, bei denen der Rechenaufwand, aber auch die erzielbare Genauigkeit, reduziert sind. Für eine industrielle Fertigungsstraße sind derartige Kalibrierverfahren allerdings meist zu aufwendig und können insbesondere aufgrund von während der Fertigung häufig notwendigen Nachkalibrierungen nicht zeit- und geldsparend eingesetzt werden. Zudem müssen meist sinnvolle Startwerte für die Iteration vorgegeben werden. Dies macht eine vollautomatische Kalibrierung während des laufenden Prozesses schwierig.

Eine zweite Gruppe von Kalibrierverfahren versucht, physikalische und geometrische Randbedingungen auszunutzen, um die Parameter des Kameramodells in einzelne Gruppen zu unterteilen und in separaten, aufeinander folgenden Schritten zu ermitteln. Durch diese Reduktion der in einem Schritt zu bestimmenden Parameter verringert sich der Rechenaufwand im Vergleich zur iterativen Suche im vollständigen Parameterraum erheblich, obwohl eine gleichermaßen hohe Genauigkeit erreicht werden kann. Ein solches Verfahren ist bspw. in dem Aufsatz Roger Y. Tsai, "A Versatile Camera Calibration Technique for High-Accuracy 3D Machine Vision Metrology Using Off-the-Shelf TV Cameras and Lenses", IEEE Journal of Robotics and Automation", Vol. RA-3, No. 4, August 1987, beschrieben, bei dem geometrische Bedingungen für die Bewegung der Kamera zugrundegelegt werden, um Kameraparameter separat mit einfacheren Gleichungssystemen bestimmen zu können. Diese Lösung ist jedoch aufgrund der geometrischen Beschränkung nicht universell einsetzbar. Außerdem ist nachteilig, dass zur Kamerakalibrierung ein gesonderter Kalibrierkörper mit bestimmten geometrischen Eigenschaften eingesetzt werden soll. Ein solcher Kalibrierkörper muss außerhalb des normalen Arbeitsablaufs in das Sichtfeld der Kamera eingebracht. Dies stellt einen erheblichen Eingriff in den Produktionsprozess dar. Zur Bestimmung der äußeren Kameraparameter ist zudem die Kenntnis der Lage (Position und Orientierung) des Kalibrierkörpers im Messsystem erforderlich. Dies erfordert entsprechenden Aufwand für die Vermessung bspw. durch externe Messgeräte sowie das hochgenau reproduzierbare Einbringen des Kalibierkörpers zur Nachkalibierung.

In der EP 1 143 221 A2 wird ein ähnliches Verfahren zur Bestimmung der Position eines Koordinatensystems eines Werkstücks im dreidimensionalen Raum beschrieben, bei dem das Werkstück zur Ermittlung seiner Raumposition mit mindestens zwei im Raum kalibrierten Kameras aufgenommen wird. Die Kalibrierung der Kameras findet in einem Lochkameramodell statt, wobei das Verfahren ohne Kalibriertafeln auskommen soll. Dazu erfolgt bei der Kamerakalibrierung eine direkte Vermessung der Position und der Orientierung der Lichteintrittsöffnung einer jeden Kamera, indem die Position und die Orientierung der Lichteintrittsöffnung einer jeden Kamera in ihrem passiven Zustand mit einem separaten Messsystem vermessen werden, welches zur direkten Antastung der Lichteintrittsöffnung imstande ist und welches die Position und die Orientierung der Lichteintrittsöffnung im Weltkoordinatensystem liefert. In diesem Fall findet also eine rein externe Vermessung der Kameralage statt, welche sowohl die Kameraposition als auch die Kameraorientierung umfasst. Nachteilig ist, dass zur Vermessung der Orientierung ein großes ausgedehntes Hilfsmittel mit mehreren Messmarken notwendig ist. Das Hilfsmittel ist ein Messmittel und muss daher entsprechend vorsichtig gehandhabt werden, was in industrieller Umgebung nur schwer möglich ist.

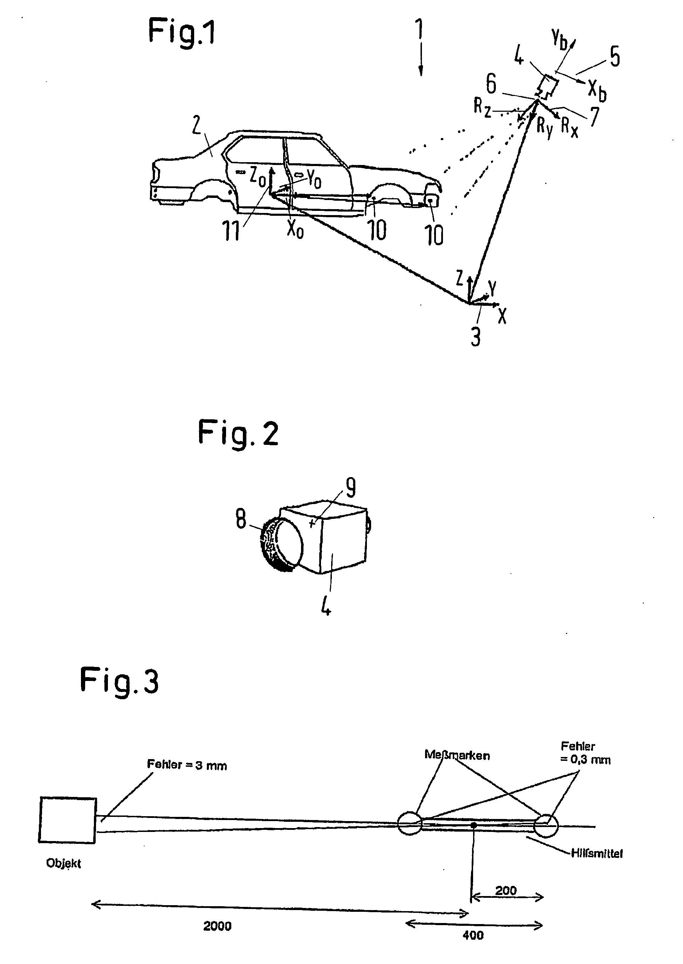

Ein weiterer Nachteil besteht darin, dass die erforderliche Genauigkeit für Messungen mit Pixel- oder Subpixelgenauigkeit für hohe Entfernungen von der Kamera zum Messobjekt nicht erreicht werden kann. Bei Ausdehnung des Hilfsmittels von bspw. 400 mm mit Messmarken an den äußeren Punkten und der Bestimmung einer Messmarke mit der Genauigkeit von 0,3 mm kann aus dem Strahlensatz berechnet werden, dass bei einer Entfernung der Kamera zum Messobjekt von 2000 mm ein Fehler von 3 mm entsteht, was für Apptikationen häufig nicht ausreichend ist. Der dieser Überlegung zugrundeliegende Aufbau ist in Fig. 3 dargestellt.

In der Druckschrift WO 99/22281 A wird ein Verfahren zur Messung der Position und der Ausrichtung von einer oder mehreren bewegten Kameras beschrieben. In der Offenbarung der Druckschrift wird darauf hingewiesen, dass ein Bild eines durch eine Kamera anvisierten Objekts von elf Parametern abhängt, von denen wenigstens fünf intrinsische Parameter darstellen. Diese intrinsischen Parameter können durch bekannte Kalibrierungen festgelegt werden, die durchgeführt werden können, sobald die Elemente der Kamera zusammengebaut worden sind. Die in der Druckschrift näher beschriebene Messung beschäftigt sich mit der Bestimmung der sechs extrinsischen Parameter, welche die Lokalisierung der Kamera darstellt. Zur Bestimmung der extrinsischen Parameter, die in einem Schritt erfolgt, wird eine feste Visiereinrichtung verwendet.

In der Druckschrift EP 0 763 406 A wird ein Verfahren zur Bestimmung der Lage eines Körpers im Raum offenbart. Verfahren zur Bestimmung der Lage eines Körpers im Raum sind insbesondere bei der Herstellung von Kraftfahrzeugen erforderlich, wenn an einem solchen Kraftfahrzeug Manipulationen, beispielsweise beim Schweißen, Lackieren oder Abdichten von Nähten, durchgeführt werden sollen. In dem bekannten Verfahren werden zunächst in einem Raum mit Kameras Kalibriertafeln eingebracht, die dazu dienen, die räumliche Lage bzw. das Koordinatensystem der zugehörigen Kamera festzulegen. Hierdurch werden die Kameras vermessen, Wird nun ein Körper in den Raum verbracht, so wird ein charakteristischer Punkt am Körper ausgewählt. Mittels der Kamera wird die Position je eines charakteristischen Punkts am Körper abgebildet und zusammen mit den Werten zur Vermessung der Kameras verarbeitet. Hieraus kann die Lage des Körpers im Raum in den sechs räumlichen Freiheitsgraden (d.h. die Lage des Körpers und seine Orientierung) bestimmt werden.

Aufgabe der Erfindung ist es daher, ein Kalibrierverfahren anzugeben, das bei hoher Genauigkeit einfach handhabbar ist und optimal in automatisierte Produktionsabläufe eingefügt werden kann.

Diese Aufgabe wird durch ein Kalibrierverfahren mit den Merkmalen des Anspruchs 1 gelöst. Erfindungsgemäß läuft das Verfahren in mindestens drei Verfahrensschritten ab, wobei in einem ersten Verfahrensschritt die inneren Kameraparameter einer bestimmten Kamera ermittelt und dieser Kamera fest zugeordnet werden, in einem zweiten Verfahrensschritt die Position der in dem Messsystem montierten Kamera bestimmt wird und in einem dritten Verfahrensschritt die Orientierung der Kamera im dreidimensionalen Bezugskoordinatensystem durch Auswertung von Kamerabildern ermittelt wird. Die Aufteilung in die vorgenannten Verfahrensschritte ist derart gewählt, dass die Verfahrensschritte einfach und mit gängiger Technologie im industriellen Umfeld einfach umgesetzt werden können.

Dabei werden zunächst die inneren Parameter eines Kameratyps insbesondere separat ermittelt und diesem Kameratyp fest zugeordnet. Weil die Bestimmung dieser inneren Kameraparameter von dem späteren Montageort der Kamera unabhängig sind, ist es ausreichend, diese Parameter für jeden Kameratyp einmal bspw. in einem speziellen Messlabor zu ermitteln und für weitere Kalibrierverfahren mit demselben Kameratyp als bekannt vorauszusetzen.

In einem zweiten Verfahrensschritt, für den die Inbetriebnahme der Kamera am Montageort noch nicht notwendig ist, wird die Position der in dem Messsystem montierten Kamera insbesondere mit externen Messmitteln ermittelt. Diese Messung ist vollständig unabhängig von der Ermittlung der inneren Kameraparameter und daher unabhängig von dabei aufgetretenen Fehlern. Nach dem zweiten Verfahrensschritt sind also in voneinander unabhängigen Messungen die inneren, die Abbildungseigenschaften der Kamera betreffenden Kameraparameter sowie die Raumposition der Kamera im Welt- bzw. Bezugskoordinatensystem in voneinander vollständig unabhängigen Messverfahren bestimmt worden. Dabei ist die Bestimmung der absoluten Position der Kamera im Bezugskoordinatensystem mittels einfacher Standard-Messsysteme, bspw. Lasertrackern, möglich, die zur Vermessung an robotergeführten Anlagen häufig ohnehin fest installiert sind.

Die Bestimmung der Orientierung der Kamera im Raum, welche im Vergleich zur Positionsbestimmung bei Verwendung externer Messmittel einen erheblichen Messaufwand verursacht, wird dagegen erfindungsgemäß durch Auswertung von Kamerabildern unter Verwendung der in den ersten beiden Verfahrensschritten ermittelten Kameraparameter bestimmt. Die hierfür vorzusehende Bildauswertung ist vergleichsweise einfach, da lediglich zwei im Raum bekannte Messpunkte in dem Kamerabild der einen Kamera auszuwerten sind. Dies bedeutet im Gegensatz zu Kalibrierverfahren, bei denen sämtliche äußeren und inneren Kameraparameter aus denen Bildern selbst gewonnen werden, eine erhebliche Performancesteigerung ohne einen damit verbundenen Genauigkeitsverlust, weil durch die Bildauswertung im dritten Verfahrenschritt die extern bestimmten Positionsdaten der Kamera sowie die inneren Kameraparameter zueinander in Beziehung gesetzt und für die gemeinsame Kalibrierung verwendet werden.

Da ein erfindungsgemäßes Messsystem häufig an bereits existierenden Arbeitsplätzen aufgebaut werden soll, ist es wichtig, dass der Aufbau und die Kalibrierung des Messsystems zeitoptimiert erfolgen können, damit lange Ausfallzeiten bspw. einer Montage- oder Produktionsstraße nicht auftreten. Dafür ist es vorteilhaft, wenn der erste Verfahrensschritt zur Bestimmung der inneren Kameraparameter vor der Montage der Kamera in dem Messsystem bspw. unter Laborbedingungen mit einem an sich bekannten Messverfahren, insbesondere durch Einbringen eines hochgenauen Kalibrierkörpers in ein Kamerabild, stattfindet. Eine für einen Kameratyp durchgeführte Kalibrierung ist für diesen Kameratyp universell gültig, so dass der erste Verfahrensschritt nicht bei jeder Inbetriebnahme eines Messsystems mit demselben Kameratyp wiederholt werden muss. Hierdurch wird die Wirtschaftlichkeit des erfindungsgemäßen Verfahrens weiter erhöht.

Die Position der Kamera kann in einfacher Weise durch Vermessen eines einzigen ausgezeichneten Kamerapunkts in Form einer Messmarke, die in bekannter Relation zu der Kamera steht, bestimmt werden. Dies hat den Vorteil, dass mit dem externen Messmittel zur Bestimmung der Kameraposition nur ein einziger Messpunkt angepeilt, erfasst und ausgewertet werden muss, wodurch die Bestimmung der Position im Raum mit gängigen Messmitteln und geringem Zeitaufwand möglich ist.

Hierfür kann ein ausgezeichnetes Merkmal in dem Kameragehäuse, bspw. eine Ecke, Kante oder ein sonstiger insbesondere punktförmiger Kamerapunkt als Messmarke dienen. Ferner ist es erfindungsgemäß möglich, zur Vermessung der Position der Kamera eine Messmarke an der Kamera festzulegen. Hierzu kann einfacher Weise ein Deckel mit der Messmarke in die Objektivaufnahme der Kamera eingesetzt bzw. eingeschraubt werden und mit einem externen Messmittel, bspw. einem Lasertracker oder einem Theodolit, vermessen werden. Da die Konstruktion der Kamera zwischen Objektivaufnahmen und Bildsensor bekannt ist, lässt sich ein einfacher Bezug zu den im ersten Verfahrensschritt ermittelten inneren Kameraparametern, welche insbesondere die Objektiv-Linsen-Eigenschaften sowie die Geometrie der Anordnung Objektiv-Bildsensor betreffen, hergestellt werden. Mögliche Positionsfehler werden durch die aus dem Bild herausgerechnete Orientierung kompensiert.

Nach Durchführung dieses zweiten Verfahrensschitts ist also die Position der installierten Kamera im gemeinsamen, metrischen Bezugskoordinatensystem des Messsystems bestimmt. Position bedeutet hierbei die Festlegung der Koordinaten X, Y und Z des Weltkoordinatensystems. Die Orientierung der Kamera, d.h. insbesondere die Ausrichtung des Objektivs, ist nach dem zweiten Verfahrensschritt noch nicht bekannt.

Erfindungsgemäß kann die Orientierung der Kamera in einem weiteren, insbesondere dem dritten, Verfahrensschritt durch Erfassen von zwei oder mehr Merkmalen in einem Kamerabild bestimmt werden, wobei die Position der Merkmale in dem Welt- bzw. Bezugskoordinatensystem bekannt sind. Zur Lösung der Gleichungen, die zur Bestimmung der drei Orientierungen $Rx_k$, $Ry_k$, $Rz_k$, aufzustellen sind, werden mathematisch mindestens zwei über die Kamera abgebildete Merkmale und deren Koordinaten in der Bildmatrix in Form von zweidimensionalen Bildkoordinaten $X_b$ und $Y_b$ benötigt. Die Auswertung dieser Merkmale im Kamerabild kann mittels eines in einem Rechner installierten Bildauswertungssystem automatisch oder grafisch interaktiv erfolgen. Entscheidend ist, dass die Positionen der in dem Kamerabild erfassten und ausgewerteten Merkmale in dem Bezugskoordinatensystem bekannt sind.

Erfindungsgemäß können die Merkmale Teil des Objektes sein, dessen Lage vermessen werden soll. Auf diese Weise wird eine bei der Montage der Kamera kalibrierkörperfreie Kalibrierung erreicht, da die Verwendung eines Kalibrierkörpers bekannter Geometrie nicht erforderlich ist. Ein Kalibrierkörper ist dabei ein eigens zum Zwecke der Kamera- und Systemkalibrierung angefertigter Körper, der in den Sichtbereich einer Kamera einzubringen ist. Zur Erzielung der erforderlichen Messgenauigkeit bei der Bestimmung sämtlicher Kameraparameter mittels des Kalibrierkörpers muss der Kalibrierkörper mindestens um einen Faktor 10 genauer angefertigt sein als die angestrebte Messgenauigkeit. Dies ist bei der vorliegenden dreistufigen Kalibrierung des Messsystems nicht notwendig, da lediglich die Orientierung der Kamera im Raum mittels im Bild erfasster (Mess-)Merkmale zu bestimmen ist. Es hat sich herausgestellt, dass hierfür Merkmale an dem Bearbeitungsobjekt selbst herangezogen werden können. Dies sind vorteilhaft ausgezeichnete Formelemente des Objektes, bspw. Löcher, Kanten oder dergleichen, welches ohnehin an dem Arbeitsplatz gehandhabt und vermessen werden soll.

Die Position der in der Kamera abgebildeten Merkmale kann dabei durch Vermessen mittels eines externen Messmittels oder aus der Kenntnis der Merkmalsposition in Objektkoordinaten und anschließender Vermessung der Objektlage im Bezugskoordinatensystem mit externen Mitteln bestimmt werden. Die Merkmalsposition in Objektkoordinaten kann beispielsweise aus bekannten Konstruktionsdaten (CAD), einer vorherigen Vermessung der Merkmalspositionen durch Vermessung des Objekts beispielsweise in einem Messhaus oder dergleichen ermittelt werden. Anstelle der Vermessung der Objektlage im Bezugskoordinatensystem kann auch eine Annahme oder Definition der aktuellen Objektlage bei Systeminbetriebnahme als Bezugssystem herangezogen werden. Gegebenenfalls können auch separate Messmerkmale künstlich an das zu handhabende Objekt beispielsweise durch Ankleben, magnetisches Anheften oder dergleichen angebracht werden. In diesem Fall sind die Positionen der Objektkoordinaten aus den Konstruktionsdaten nicht bekannt und werden mit externen Messmitteln bestimmt.

Gegebenenfalls kann es von Vorteil sein, mit einem im System installierten Roboter zwei Positionen im Kamerabild anzufahren und ein Merkmal am Roboter über das Bildverarbeitungssystem zu vermessen oder insbesondere grafisch interaktiv anzupeilen. Da der Roboter im allgemeinen metrisch kalibriert arbeitet, sind die Koordinaten der Positionen der zwei Robotermerkmale im Bezugskoordinatensystem bekannt und können für den dritten Verfahrensschritt herangezogen werden. Diese Vorgehensweise ist insbesondere für das Nachkalibrieren von Kameras vorteilhaft, beispielsweise bei Kameraausfall oder Kameratausch, da das Nachkalibrieren vollautomatisch erfolgen kann. Die Verfahrenschritte eins und zwei müssen in diesem Fall nicht mehr durchgeführt werden, da die ermittelten Parameter als konstant angenommen werden können. Der dritte Verfahrenschritt kann durch einen Roboter vollautomatisch, gegebenenfalls sogar bei automatischer Beauftragung, durchgeführt werden, so dass auch das Nachkalibrieren besonders einfach ist.

Mit dem erfindungsgemäßen System wird ein Verfahren zur Kalibrierung eines auf Kameras basierenden Messsystems zur Bestimmung von Objektpositionen in allen sechs Freiheitsgraden (Positionen X, Y , Z und Orientierungen $R_x$, $R_y$, und $R_z$) beschrieben, welches bei einer hohen erreichbaren Genauigkeit mit gängigen Hilfsmitteln umgesetzt und einfach aufgebaut werden kann.

Weitere Merkmale, Vorteile und Anwendungsmöglichkeiten der Erfindung ergeben sich auch aus der nachfolgenden Beschreibung von Ausführungsbeispielen und der Zeichnung.

Es zeigen:

Fig. 1     schematisch den Messaufbau für das erfindungsgemäße Verfahren zur Kalibrierung eines auf mindestens einer Kamera basierenden Messsystems;

Fig. 2     eine Kamera des Messsystems und

Fig. 3     schematisch eine Anordnung zur Fehlerabschätzung.

In Fig. 1 ist schematisch ein Messsystem 1 zur Bestimmung der Lage eines als Karosse ausgebildeten Objekts 2 in einem dreidimensionalen Bezugskoordinatensystem 3 dargestellt, welches das Weltkoordinatensystem bildet. Dazu wird das Objekt 2 mit einer kalibrierten optischen Kamera 4 erfasst und die Lage des Objektes 2 anhand bestimmter Objektmerkmale bestimmt.

Bevor es möglich ist, mit dem Messsystem 1 die Position und Ausrichtung des Objektes 2 in dem Koordinatensystem 3 zu bestimmen, muss bei Inbetriebnahme des Messsystems 1 die Kamera 4 kalibriert werden.

Kalibrierung bedeutet dabei die Herstellung eines rechnerischen Zusammenhangs zwischen den Bildkoordinaten $X_b$ , $Y_b$ eines Bildkoordinatensystems 5, der Kamera 4 und einem metrischen Bezugs- bzw. Weltkoordinatensystem 3, das im Allgemeinen den dreidimensionalen Raum mit den Koordinaten X, Y und Z beschreibt. Die Methode zur Herstellung dieser Beziehung ist die Modellierung des physikalischen Zusammenhangs zwischen den beiden Koordinatensystemen 3, 5. Hierzu werden alle physikalischen Sachverhalte modelliert und parametrisch erfasst, welche die Abbildung eines beliebigen Raumpunktes auf den Bildsensor einer insbesondere digitalen Kamera 4 bestimmen.

In diesem Zusammenhang unterscheidet man innere Kameraparameter und äußere Kameraparameter. Die äußeren Kameraparameter sind die Position 6 und die Orientierung 7 der Kameras 4 in dem Bezugskoordinatensystem 3, welche als 6-dimensionaler Vektor erfasst werden können ($X_k$, $Y_k$, $Z_k$, $Rx_k$, $Ry_k$, $Rz_k$). Die inneren Kameraparameter sind beispielsweise die Bildweite f, die Verzeichnungskoeffizienten Kappa $K_1$ und $K_2$, die Ausdehnungen der Bildsensorelemente $d_x$ und $d_y$, die Verkippungen $\Delta_x$ und $\Delta_y$ der Bildsensorebene gegenüber der optischen Achse und der Durchtrittspunkt $S_x$ und $S_y$ der optischen Achse durch den Bildsensor. Zur Kalibrierung der in dem Messsystem 1 verwendeten Kamera 4 werden die äußeren und inneren Parameter in verschiedenen Schritten kalibriert, die nachfolgend näher erläutert werden.

In einem ersten der mindestens drei Verfahrensschritte werden die inneren Kameraparameter der Kamera 4 ermittelt und dieser Kamera 4 fest zugeordnet.

Dazu werden die Kamera 4 und das in Fig. 2 dargestellte Objektiv 8 der Kamera 4 in einem separaten Kalibrierraum beispielsweise bei der Herstellung und Vorkonfektionierung des Messsystems 1 aufgebaut. Das Objektiv 8 wird insbesondere im Hinblick auf die Objektentfernung und die Blende auf die Verhältnisse beim späteren Einsatz des Messsystems 1 eingestellt und die Kamera 4 in Betrieb genommen. In der später geplanten Objektentfernung wird das Bild eines in der Zeichnung nicht näher dargestellten Kalibrierkörpers bekannter Geometrie aufgenommen und zur Durchführung der Kamerakalibrierung in an sich bekannter Weise ausgewertet. Auf diese Weise werden die inneren Parameter der für das Messsystem 1 verwendeten Kamera 4 mit dem entsprechenden Objektiv 8 bestimmt. Bei dieser nicht am späteren Montageort des Messsystems 1 durchgeführten Kalibrierung der inneren Kameraparameter, welche auch Offsite-Kalibrierung genannt wird, werden die inneren Kameraparameter 4 für eine bestimmte Kamera 4 mit einem bestimmten Objektiv 8 in vorgegebenen Aufnahmesituationen ermittelt. Die vor der Montage des Messsystems 1 im Labor ermittelbaren inneren Kameraparameter gelten für alle Kameras 4 des gleichen Typs sowie für andere Kameras und Objektive bei ausreichender Baugleichheit zu dem kalibrierten Kamerasystem aus Kamera 4 und Objektiv 8.

Dieses Verfahren hat den Vorteil, dass die Kalibrierung der inneren Kameraparameter nicht bei dem in der Regel zeitkritischen Aufbau des Messsystems 1 am späteren Einsatzort erfolgen muss und es unter Laborbedingungen in der Regel einfacher ist, die inneren Kameraparameter mit ausreichender Genauigkeit zu ermitteln. Die Erfindung ist jedoch nicht auf die Durchführung des ersten Verfahrensschritts in der vorbeschriebenen Art und Weise beschränkt. In äquivalenter Weise kann der erste Verfahrensschritt auch nach einer festen Montage der zu installierenden Kamera 4 mit Objektiv 8 am Einsatzort, d.h. in einer sogenannten Onsite-Kalibrierung, erfolgen. Dazu wird ein Kalibrierkörper in der Nähe des Einsatzortes positioniert und die innere Kamerakalibrierung durchgeführt. Die Position des Kalibrierkörpers im Bezugskoordinatensystem muss nicht bekannt sein. Es ist hierfür also kein externes Messmittel erforderlich. Der Kalibrierkörper muss lediglich von der Kamera 4 erfasst und abgebildet werden. Nach Bestimmung der inneren Kameraparameter der Kombination aus Kamera 4 und Objektiv 8, welche grundsätzlich genauso abläuft wie bei der vorbeschriebenen Verfahrensvariante, wird der Kalibrierkörper entfernt. Diese Kalibrierung der inneren Kameraparameter erfordert zwar mehr Zeit beim Aufbau des Messsystems 1, führt qualitativ jedoch prinzipiell zu demselben Ergebnis. Bei dieser Variante können auch der erste und zweite Verfahrensschritt getauscht werden.

Nach der Montage der Kamera 4 des Messsystems 1 am endgültigen Montageort wird in einem zweiten Verfahrensschritt die Position 6 der Kamera 4 bestimmt, d.h. es werden die Koordinaten $X_k$, $Y_k$, $Z_k$ der Kamera in dem Bezugskoordinatensystem 3 ermittelt. Dazu ist es möglich, die montierte Einheit aus Kamera 4 und Objektiv 8 insbesondere nach der Ausrichtung und Einstellung des Objektivs auf den gewünschten Bildbereich zur Aufnahme des Objektes 2 in dieser Ausrichtung zu belassen und an dem Gehäuse eine Messmarke 9 anzubringen bzw. ein ausgezeichnetes, vorzugsweise insbesondere punktförmiges Merkmal des Kameragehäuses als Messmarke 9 zu verwenden. Durch eine externe Vermessung, bspw. mittels eines Lasertrackers oder Theodoliten, wird die Position dieser Messmarke 9 im Bezugskoordinatensystem 3 genau bestimmt. Aufgrund der Kenntnis der Geometrie des Gehäuses der Kamera 4 und der Anordnung des Bildsensors relativ dazu, kann auf die relevante Kameraposition $X_k$, $Y_k$, $Z_k$ geschlossen werden. Diese Vermessung der Kameraposition 6 hat den Vorteil, dass sie in dem vollständig fertig montierten Zustand der Kamera 4 erfolgen kann.

In einer Variante des zweiten Verfahrensschritts ist es auch möglich, das Objektiv 8 von der festmontierten Kamera 4 abzunehmen und eine Messmarke 9 in die genormte und hochgenaue Objektivaufnahme der Kamera 4 einzubringen. Auch in diesem Fall wird die Position dieser Messmarke 9 durch eine externe Vermessung bestimmt, wobei aufgrund der bekannten und konstanten Beziehung zwischen der Messmarke 9 und dem Bildsensor in der Kamera 4 oder anderer Kamerabezugsmerkmale auf die Kameraposition rückgeschlossen werden kann.

Nach der externen Bestimmung der Position 6 der Kamera 4 im Raum muss die Orientierung 7 der Kamera, d.h. die Ausrichtung des Objektivs 8, bestimmt werden. Dazu werden in einem dritten Verfahrensschritt Kamerabilder ausgewertet, um die Orientierung 7 der Kamera 4 im dreidimensionalen Bezugskoordinatensystem 3 zu ermitteln.

Die Berechnung der Orientierung 7 der Kamera 4 im Raum bzw. allgemein äußerer Kameraparameter beruht auf der Lösung von Gleichungen der projektiven Abbildung. Dieser Ansatz wird Lochkameramodell genannt. Grundlage des Lochkameramodells ist die für alle Raumpunkte geltende Randbedingung, dass der Sehstrahl jedes Raumpunktes $(X, Y, Z)$ durch das Projektionszentrum, welches durch das Loch der Lochkamera gebildet ist, laufen muss. Der Auftreffpunkt des Sehstrahls auf dem Bildsensor bestimmt dann die Bildkoordinaten $X_b$ und $Y_b$. Für jeden Raumpunkt können dann zwei Gleichungen aufgestellt werden, die dem Strahlensatz folgen:

$$\frac{X_b}{f} = \frac{X_k}{Z_k} \quad (1)$$

und

$$\frac{Y_b}{f} = \frac{Y_k}{Z_k} \quad (2),$$

wobei f die Bildweite und $X_k$, $Y_k$, und $Z_k$, die Koordinaten des Raumpunkts im Kamerakoordinatensystem sind.

Für die Koordinaten des Raumpunktes im Kamerabezugskoordinatensystem gilt

$$X_k = T_k * X \quad (3),$$

wobei $X_k$ die Koordinaten des Raumpunktes im Kamerabezugskoordinatensystem in vektorieller Darstellung, X die Koordinaten des Raumpunktes im Weltbezugssystem in vektorieller Darstellung und $T_k$ eine Transformationsmatrix der Größe 4x4 (Darstellungen in homogenen Koordinaten) vom Kamerabezugssystem zum Weltbezugssystem ist.

Die Transformationsmatrix berechet sich eindeutig aus den sechs Parametern $X_k$, $Y_k$, $Z_k$, $Rx_k$, $Ry_k$,

Rz$_k$ der äußeren Kameraparameter. Für das betrachtete Verfahren sind die translatorischen Parameter der Kameraposition X$_k$, Y$_k$, Z$_k$, bekannt. Durch Vermessen nur eines Raumpunktes können aus den zwei Gleichungen die drei unbekannten Rx$_k$, Ry$_k$, Rz$_k$ also nicht bestimmt werden. Daher sind mindestens zwei Raumpunkte erforderlich, um aus den sich ergebenden vier Gleichungen (1) und (2) die drei Orientierungen, Rx$_k$, Ry$_k$, Rz$_k$ berechnen zu können.

Dazu werden ein Messobjekt 2 beispielsweise in Form einer Karosse wie in Fig. 1 dargestellt am Messort positioniert und zwei oder mehr Messmerkmale 10, die im Kamerabild sichtbar sind, zur Bestimmung der Kameraorientierung 7 verwendet. Die Position der Messmerkmale 10 ist dabei im Bezugskoordinatensystem 3 bekannt. Hierzu sind die folgenden Alternativen denkbar.

Die Position der Messmerkmale 10 kann in einem Objektkoordinatensystem 11 mit den Koordinaten X$_o$, Y$_o$, Z$_o$ (in vektorieller Darstellung X$_o$) bestimmt werden. Zur Ermittlung der Messmerkmale 10 im Bezugskoordinatensystem 3 muss in diesem Fall nur noch die Lage des Objektes 2 im Bezugskoordinatensystem 3 bspw. durch externe Vermessung bestimmt werden. Die Positionsdaten der Messmerkmale 10 im Bezugskoordinatensystem 3 berechnen sich dann aus der Beziehung

$$X = T_o * X_o \quad (4),$$

wobei T$_o$ eine Transformationsmatrix der Größe 4X4 vom Bezugskoordinatensystem 3 zu dem Objektkoordinatensystem 11 ist.

Anstelle der Bestimmung der Positionsdaten der Messmerkmale 10 im Objektkoordinatensystem 11 aus Konstruktionsdaten können diese auch durch eine Vermessung des Objektes 2 beispielsweise in einem Messhaus ermittelt werden. Da diese Positionen der Messmerkmale 10 des Objektes 2 in dem Objektkoordinatensystem 11 oft ohnehin bekannt sind, ist es häufig einfacher, statt einer unmittelbaren Vermessung aller Messmerkmale 10 mit externen Messmitteln direkt im Bezugskoordinatensystem 3 nur die Lage des Objektes 2 einmal im Bezugskoordinatensystem 3 zu messen und wie dargestellt auf die Position der Messmerkmale 10 zurückzurechnen.

Statt zur Bestimmung der Orientierung 7 der Kamera 4 Messmerkmale 10 eines im Verfahrensablauf ohnehin verwendeten Objektes 2 zu verwenden, können auch spezielle Messmarken an einem beliebigen Messobjekt angebracht werden, deren Position entweder durch eine externe Vermessung direkt am Applikationsort oder durch eine vorherige Vermessung in einem Objektkoordinatensystem 11 und Vermessung der Position des Objektes 2 am Applikationsort erfolgen kann. Es kann alternativ auch ein separater Kalibrierkörper an dem Applikationsort eingesetzt werden, dessen Position im Bezugskoordinatensystem 3 bestimmt wird, aus welcher die Messmerkmale 10 im Bezugskoordinatensystem 3 abgeleitet werden können. Dies kann entweder aufgrund einer bekannten Geometrie des Kalibrierkörpers oder auch durch direkte Vermessung der Position der Messmerkmale erfolgen.

Durch die dreistufige Kalibrierung, deren Kalibrierschritte nicht zwangsläufig unmittelbar aufeinander folgen müssen, der in dem Messsystem 1 eingesetzten Kamera 4 können die inneren und äußeren Kameraparameter mit vergleichsweise wenig Aufwand ermittelt werden und die Einrichtung des Messsystems 1 in zeitoptimierter Weise erfolgen. Dies gilt insbesondere für die Verfahrensvariante, in der die inneren Parameter für das System aus Kamera 4 und Objektiv 8 in dem ersten Verfahrensschritt vor der Montage ermittelt und der Kamera 4 fest zugeordnet werden und bei dem der dritte Verfahrensschritt anhand von auf dem Objekt 2 vorhandenen Messmerkmalen durchgeführt wird, da es bei Inbetriebnahme einer Anlage ohnehin erforderlich ist, den Verfahrensablauf zu überprüfen und dabei das Objekt 4 genau zu vermessen. Anhand dieser Daten kann dann die gesamte Kamerakalibrierung durchgeführt werden, ohne dass sich die Kalibrierung durch eigene Verfahrensschritte verzögert.

Diese Kalibrierung, insbesondere die Verfahrensschritte zwei und drei, kann auch im laufenden Betrieb ohne Unterbrechung einer Produktion für eine Rekalibrierung des Messsystems 1 durchgeführt werden.

**Bezugszeichenliste:**

| | |
|---|---|
| 1 | Messsystem |
| 2 | Objekt, Karosse |
| 3 | Bezugs- bzw. Weltkoordinatensystem |
| 4 | Kamera |
| 5 | Bildkoordinatensystem |
| 6 | Position der Kamera |
| 7 | Orientierung der Kamera |
| 8 | Objektiv |
| 9 | Messmarke |
| 10 | (Mess-)Merkmal |
| 11 | Objektkoordinatensystem |

**Patentansprüche**

**1.** Verfahren zur Kalibrierung eines auf mindestens einer Kamera (4) basierenden Messsystems (1) zur Bestimmung der Lage eines Objekts (2) in einem dreidimensionalen Bezugskoordinatensystem (3), bei dem die äußeren und inneren Kameraparameter in verschiedenen Schritten kalibriert werden, wobei in einem ersten Verfahrensschritt die inneren Kameraparameter einer bestimmten Kamera (4) ermittelt und dieser Kamera (4) fest zugeordnet werden, **dadurch gekennzeichnet, dass** in einem zweiten Verfahrenschritt die Position (6) der in dem Messsystem montierten Kamera (4) mit einem externen Messmittel bestimmt wird und in einem dritten Verfahrensschritt die Orientierung (7) der Kamera (4) im dreidimensionalen Bezugskoordinatensystem (3) durch Auswertung von Kamerabildern ermittelt wird.

2. Verfahren nach Anspruch 1, **dadurch gekennzeichnet, dass** der erste Verfahrensschritt vor der Montage der Kamera (4) in dem Messsystem (1) stattfindet.

3. Verfahren nach Anspruch 1 oder 2, **dadurch gekennzeichnet, dass** die Position (6) der Kamera (4) durch Vermessen eines ausgezeichneten Kamerapunkts, der in bekannter Relation zu der Kamera (4) steht, bestimmt wird.

4. Verfahren nach einem der vorhergehenden Ansprüche, **dadurch gekennzeichnet, dass** zur Vermessung der Position (6) der Kamera (4) eine Messmarke (9) an der Kamera (4) festlegbar ist.

5. Verfahren nach einem der vorhergehenden Ansprüche, **dadurch gekennzeichnet, dass** zur Bestimmung der Orientierung (7) der Kamera (4) im Raum zwei oder mehr Merkmale (10) in einem Kamerabild erfasst werden, deren Positionen im Bezugskoordinatensystem (3) bekannt sind.

6. Verfahren nach Anspruch 5, **dadurch gekennzeichnet, dass** die Merkmale (10) Teil des Objekts (2) sind, dessen Lage vermessen werden soll.

7. Verfahren nach Anspruch 5 oder 6, **dadurch gekennzeichnet, dass** die Position der Merkmale (10) mit externen Messmitteln vermessen wird.

8. Verfahren nach Anspruch 5 oder 6, **dadurch gekennzeichnet, dass** Position der Merkmale (10) in einem Objektkoordinatensystem (11) bekannt sind oder bestimmt werden und die Lage des Objekts (2) im Bezugskoordinatensystem (3) bestimmt wird.

9. Verfahren nach einem der Ansprüche 5 bis 8, **dadurch gekennzeichnet, dass** die Merkmale (10) ausgezeichnete Formelemente des Objekts (2) sind.

10. Verfahren nach einem der Ansprüche 5 bis 9, **dadurch gekennzeichnet, dass** die Merkmale (10) durch ein auf einem Handhabungsgerät oder Roboter festgelegtes Merkmals gebildet werden, das kalibriert in das Kamerabild fahrbar ist und an mindestens zwei Positionen gemessen wird.

**Claims**

1. A method for calibrating a measuring system (1) based on at least one camera (4) for determining the position of an object (2) in a three-dimensional reference coordinate system (3), in which the external and internal camera parameters are calibrated in various steps, wherein in a first process step, the internal camera parameters of a specific camera (4) are determined and firmly assigned to said camera (4), **characterised in that** in a second process step the position (6) of the camera (4) mounted in the measuring system is determined with the aid of an external measuring means and in a third process step, the orientation (7) of the camera (4) is determined in the three-dimensional reference coordinate system (3) by evaluating camera images.

2. The method according to claim 1, **characterised in that** the first process step takes place prior to mounting the camera (4) in the measuring system (1).

3. The method according to claim 1 or 2, **characterised in that** the position (6) of the camera (4) is determined by measuring a marked camera point which is in a known relation to the camera (4).

4. The method according to any one of the preceding claims, **characterised in that** a measurement mark (9) can be fixed on the camera (4) for measurement of the position (6) of the camera (4).

5. The method according to any one of the preceding claims, **characterised in that** two or three features (10) whose positions are known in the reference coordinate system (3) are recorded in a camera image to determine the orientation (7) of the camera (4) in space.

6. The method according to claim 5, **characterised in that** the features (10) are part of the object (2) whose position is to be measured.

7. The method according to claim 5 or 6, **characterised in that** the position of the features (10) is measured with external measuring means.

8. The method according to claim 5 or 6, **characterised in that** the position of the features is known or determined in an object coordinate system (11) and the position of the object (2) is determined in the reference coordinate system (3).

9. The method according to any one of claims 5 to 8, **characterised in that** the features (10) are marked shape elements of the object (2).

10. The method according to any one of claims 5 to 9, **characterised in that** the features (10) are formed by a feature fixed on a handling device or robot, which is drivable into the camera image in a calibrated manner and is measured at at least two positions.

## Revendications

1. Procédé d'étalonnage d'un système de mesure (1) basé sur au moins une caméra (4) afin de déterminer la position d'un objet (2) dans un système de coordonnées de référence (3) en trois dimensions, dans lequel les paramètres de caméra extérieurs et intérieurs sont étalonnés à des étapes différentes, moyennant quoi à une première étape de procédé les paramètres de caméras intérieurs d'une certaine caméra (4) sont déterminés et sont affectés durablement à cette caméra (4), **caractérisé en ce que** à une deuxième étape de procédé, la position (6) de la caméra (4) montée dans le système de mesure est déterminée avec un moyen de mesure externe et à une troisième étape, l'orientation (7) dé la caméra est déterminée dans la système de coordonnées de référence (3) en trois dimensions en analysant des images de la caméra.

2. Procédé selon la revendication 1, **caractérisé en ce que** la première étape de procédé a lieu avant le montage de la caméra (4) dans le système de mesure (1).

3. Procédé selon la revendication 1 ou 2, **caractérisé en ce que** la position (6) de la caméra (4) est déterminée en mesurant un point de caméra distingué, qui est en relation connue avec la caméra (4).

4. Procédé selon une des revendications précédentes, **caractérisé en ce que** une marque de mesure (9) sur la caméra (4) peut être définie afin de mesurer la position (6) de la caméra (4).

5. Procédé selon une des revendications précédentes, **caractérisé en ce que** afin de déterminer l'orientation (7) de la caméra (4) dans l'espace, deux ou plusieurs caractéristiques (10) dans une image de caméra sont détectées, dont les positions sont connues dans le système de coordonnées de référence (3).

6. Procédé selon la revendication 5, **caractérisé en ce que** les caractéristiques (10) sont une partie de l'objet, dont la position doit être mesurée.

7. Procédé selon la revendication 5 ou 6, **caractérisé** e ce que la position des caractéristiques (10) est mesurée avec des moyens de mesure externes.

8. Procédé selon la revendication 5 ou 6, **caractérisé en ce que** l'emplacement des caractéristiques (10) est connu ou déterminé dans un système de coordonnées de référence (11) et la position de l'objet (2) est déterminée dans le système de coordonnées de référence (3).

9. Procédé selon une des revendications 5 à 8, **caractérisé en ce que** les caractéristiques (10) sont des éléments de forme distingués de l'objet (2).

10. Procédé selon une des revendications 5 à 9, **caractérisé en ce que** les caractéristiques (10) sont formées par une caractéristique définie sur un appareil de manipulation ou un robot, qui peut être déplacée de manière étalonnée dans l'image de caméra et est mesurée à au moins deux positions.

# Fig.1

# Fig.2

# Fig.3

Fehler = 3 mm

Objekt

Meßmarken

Fehler = 0,3 mm

Hilfsmittel

200

2000

400

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1143221 A2
- WO 9922281 A
- EP 0763406 A

**In der Beschreibung aufgeführte Nicht-Patentliteratur**

- Kalibrierung eines digitalen Bildverarbeitungssystems mit CCD-Kamera. **AUFSATZ R. GERDES.** Technisches Messen. 1993, vol. 60, 6
- TECHNISCHES MESSEN. R. Oldenbourg Verlag, 1993, vol. 60, 7, 8
- **ROGER Y. TSAI.** A Versatile Camera Calibration Technique for High-Accuracy 3D Machine Vision Metrology Using Off-the-Shelf TV Cameras and Lenses. *IEEE Journal of Robotics and Automation,* August 1987, vol. RA-3 (4